# EUROPEAN PATENT APPLICATION

(11) **EP 2 719 577 A2**
(43) Date of publication of application: **16.04.2014**
(21) Application number: 13186600.6
(22) Date of filing: 30.09.2013
(51) Int. Cl.: B60N 2/56

(54) **Vehicule seat occupant sensor and heater device**

(30) Priority: 09.10.2012 US 201261711335 P; 25.07.2013 US 201313950809
(71) Applicant: Delphi Technologies, Inc., Troy MI 48007 (US)
(72) Inventor: Fortune, Duane, D., Lebanon, IN Indiana 46052 (US); Constable, Robert, K., Kokomo, IN Indiana 46902 (US); Champion, Douglas, R., Kokomo, IN Indiana 46902 (US)
(74) Representative: Robert, Vincent

(57) **Abstract**

A seat occupant sensor and heater device (110) configured for use in a vehicle seat (20) including an occupant detection electrode (114) and a seat heating element (122). The occupant detection electrode (114) may be configured to capacitively detect and classify a seat occupant in accordance with Federal Motor Vehicle Safety Standard FMVSS-208. The device (110) includes a compressible spacer (128) disposed intermediate to the occupant detection electrode (114) and the seat heating element (122). The compressible spacer (128) is configured to reduce capacitive coupling between the occupant detection electrode (114) and the seat heating element (122) when uncompressed and increase capacitive coupling between the occupant detection electrode (114) and the seat heating element (122) when compressed. The seat occupant sensor and heater device (210) may exclude a fabric covering on the occupant detection electrode (214) in order to improve sensitivity of the occupant detection electrode (214) in high humidity conditions, i.e. relative humidity near or above 85 percent.

## Description

### TECHNICAL FIELD OF THE INVENTION

The invention generally relates to a seat occupant sensor and heater device configured for use in a vehicle seat.

### BACKGROUND OF THE INVENTION

Current occupant sensing systems use an occupant sensor or antenna that is configured to capacitively detect an occupant in the vehicle seat as part of an airbag suppression system that classifies a seat occupant as an adult occupant or a child/child safety seat in accordance with Federal Motor Vehicle Safety Standard FMVSS-208. In vehicle seats equipped with seat heaters, the occupant sensor has typically been a separate component that is assembled to the top of the seat heater and in some cases incorporates redundant films or coverings that add complexity to the seat assembly process as well as cost to the occupant sensor and seat assembly. FMVSS 208 requires some vehicles to determine whether or not to enable supplemental restraint deployment based on the weight of a seat occupant. Therefore an occupant sensor with increased sensitivity near the weight threshold is desired.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also be inventions.

### BRIEF SUMMARY OF THE INVENTION

In accordance with one embodiment of this invention, a seat occupant sensor and heater device is provided that includes both an occupant detection electrode and a seat heater element. The device includes a first conductive pattern disposed on a surface of a first substrate formed of a dielectric material. The first conductive pattern is formed of a conductive material and is configured to provide the occupant detection electrode. The device also includes a second conductive pattern disposed on a surface of a second substrate formed of dielectric material. The second conductive pattern is formed of a conductive material and is configured to provide the seat heating element. The seat occupant sensor and heater device further includes a compressible spacer that is disposed intermediate to the first substrate and the second substrate. The spacer is configured to reduce capacitive coupling between the first conductive pattern and the second conductive pattern when uncompressed and increase capacitive coupling between the first conductive pattern and the second conductive pattern when compressed. The spacer may include a compressible pneumatic cell. The seat occupant sensor and heater device may further include a third conductive pattern formed of a conductive material and configured to provide an electrical ground plane element for the occupant detection electrode to reduce capacitive coupling between the first conductive pattern and the second conductive pattern.

In accordance with another embodiment of this invention, a vehicle seat assembly including the occupant sensor and heater device described above is provided

Further features and advantages of the invention will appear more clearly on a reading of the following detailed description of the preferred embodiment of the invention, which is given by way of non-limiting example only and with reference to the accompanying drawings.

### BRIEF DESCRIPTION OF THE SEVERAL VIEWS OF THE DRAWING

The present invention will now be described, by way of example with reference to the accompanying drawings, in which:

Fig. 1 is a perspective view of a vehicle seat including a seat occupant sensor and heater device in accordance with several embodiments;

Fig. 2 is an exploded partial cross-sectional view of a seat occupant sensor and heater device in accordance with a first embodiment;

Fig. 3A is a top view of the occupant sensor portion in accordance with the embodiment of Fig. 2;

Fig. 3B is a close up top view of the attachment of a wiring harness to the occupant sensor portion in accordance with the embodiment of Fig. 2;

Fig. 3C is a close up bottom view of the attachment of a wiring harness to the occupant sensor portion in accordance with the embodiment of Fig. 2; and

Fig. 4 is an exploded partial cross-sectional view of a seat occupant sensor and heater device in accordance with a second embodiment.

Similar components are identified in the Figures by reference numbers having the same last two digits.

### DETAILED DESCRIPTION OF THE INVENTION

Section 19 of the Federal Motor Vehicle Safety Standard FMVSS-208 requires certain vehicles to inhibit deployment of supplemental inflatable restraints (air bags) if the seat protected by the air bag is occupied by an occupant smaller than a 5^{th} percentile female, i.e. a person weighing about 46 kilograms (102 pounds). This may be achieved with the use of a seat occupant sensor that detects the weight of a seat occupant. The seat occupant sensor and heater device presented herein includes a compressible spacer between the occupant sensor and the seat heater. The compressible spacer is configured to compress at relatively light loads, e.g. less than 46 kg, in order to improve occupant sensor sensitivity with loads in this range, which are typically created by children or child safety seats occupying the seat. Without subscribing to any particular theory of operation, the occupant sensor is connected to an electronic controller that determines the capacitance between the occupant sensor and the vehicle's electrical ground. When an occupant sits on the seat containing the seat occupant sensor and heater device, the occupant sensor is capacitively coupled to ground through the occupant. The seat heater is also at ground potential, so the occupant sensor is also capacitively coupled to ground through the seat heater. Physical separation between the seat heater and occupant sensor by the spacer reduces capacitive coupling between the occupant sensor and the seat heater. When an occupant sits in the vehicle seat, the compressible spacer is compressed, thus reducing the distance between the occupant sensor and the seat heater and increasing the capacitive coupling between the two. This increase in capacitive coupling is in addition to the capacitive coupling between the occupant sensor and the seat occupant, so the seat occupant sensor and heater device provides a higher level of response to an occupant in the seat.

The occupant sensor is connected though the vehicle's wiring system to an electronic controller that determines the capacitive coupling value between the occupant senor and the vehicle's electrical ground and determines whether or not to enable the air bags based on the determined value. The seat heating element is connected to vehicle electrical ground and an electrical power supply through the vehicle's wiring system.

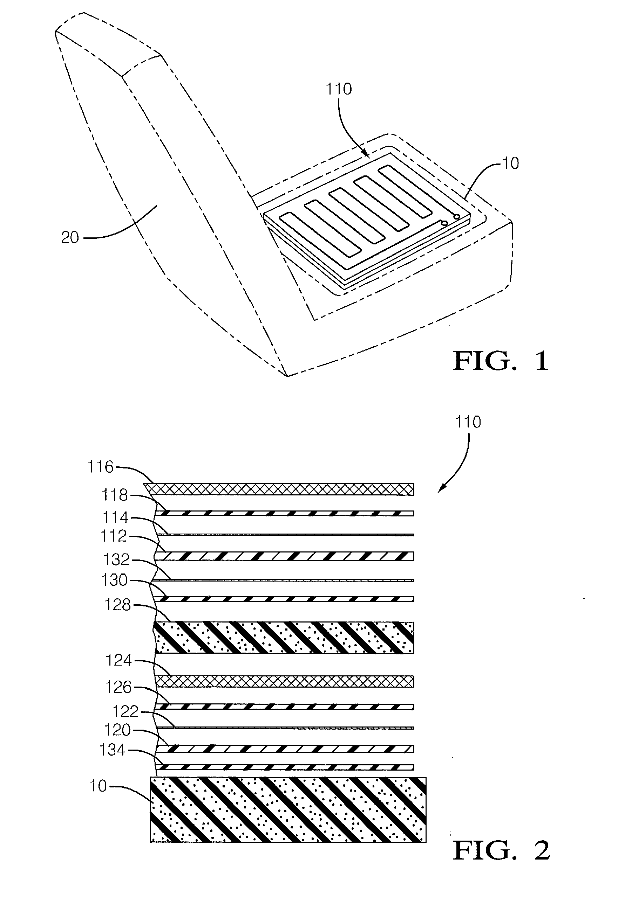

Fig. 1 illustrates a non-limiting example of a seat occupant sensor and heater device 110 disposed on a seat cushion 10 in a vehicle seat 20. The vehicle may be an automobile, truck, or any other on-road vehicle subject to the requirements of Federal Motor Vehicle Safety Standard FMVSS-208. Alternatively, the vehicle may be an off-road vehicle such as an agricultural tractor, construction equipment, or any other vehicle where seat heating and occupant detection are desired.

Fig. 2 illustrates a non-limiting example of the seat occupant sensor and heater device 110. The device 110 includes a first substrate 112 that is formed of dielectric material that is strong, yet flexible, such as polyethylene terephthalate (PET) polyester film, also known by the trade name MYLAR®. MYLAR® films are available from DuPont Teijin Films of Chester, Virginia. The first substrate 112 is provided with a suitable size and shape to be installed on the seat cushion 10 of the vehicle seat 20. A first conductive pattern 114 that is configured to provide an occupant detection electrode 114 is disposed on the first substrate 112. The occupant detection electrode 114 is formed of a conductive material, such as silver polymeric ink that is printed onto a surface of the first substrate 112 by thick film screen printing or other suitable application process, such as a laminating process. A first fabric covering 116 that is designed to cover and protect the occupant detection electrode 114 is joined to a first surface of the first substrate 112 on which the occupant detection electrode 114 is disposed. The first fabric covering may be made of a low stretch polyester or other suitable fabric. The first fabric covering 116 is attached to the first substrate 112 using a double-sided adhesive tape 118 such as 3M Venture Tape 1163 Double Coated Ultra High Peel Polyester Tape available from the 3M Company of Saint Paul, Minnesota or other suitable double-sided adhesive tape, adhesive film, or other adhesive.

The manner of making and the structure of an occupant detection electrode 114 are well known to those skilled in the art, and may take various forms, shapes and configurations beyond that specific embodiment shown for exemplary purposes in the drawings. For example, various cutouts and voids can be created both to conform to the seat in the desired areas of detection as well as to provide adequate flexibility and resiliency in the final structure.

The device 110 also includes a second substrate 120 that is formed of a dielectric material that is strong, yet flexible, such as MYLAR®. The first substrate 112 and the second substrate 120 do not need to be formed of the same material. A second conductive pattern 122 that is configured to provide a seat heating element 122 is disposed on the second substrate 120. The seat heating element 122 is formed by a conductive material, such as silver polymeric ink that is printed onto a surface of the second substrate 120 by thick film screen printing or other suitable application process, such as a laminating process. The seat heating element 122 forms a number of conductive busses, conductive traces and electrical connection terminals for supplying operating current to the seat heating element 122. A resistive layer of carbon or the like may be applied on the seat heating element 122 to provide consistent heat distribution across the surface of the vehicle seat 20 when the device 110 is installed on the seat cushion 10. The resistive layer may include a positive temperature coefficient material to provide increasing resistance as temperatures increase, thereby providing a self-regulating heater. Alternatively, a resistive layer of fixed resistance connected to an electronic controller to regulate the heat level can also be used. The resistive layer may comprise a single segment of resistive material or may comprise a plurality of discrete segments applied to selected areas of seat heating element 122.

The manner of making and the structure of a suitable seat heater element, including the structures of seat heating element 122 and the resistive layer thereof are well known to those skilled in the art, and may take various forms, shapes and configurations beyond that specific embodiment shown for exemplary purposes in the drawings. For example, various cutouts and voids can be created both to conform to the seat in the desired areas of heating as well as to provide adequate flexibility and resiliency in the final structure.

The occupant detection electrode 114 is preferably aligned relative to the seat heating element 122 in a manner to minimize variability of a sensor output of the occupant detection electrode 114. A second fabric covering 124 is attached to a surface of the second substrate 120 opposite the surface on which the seat heating element 122 is disposed. The second fabric cover may be made of a polyester cloth such as rip stop nylon. The second fabric covering 124 is attached to the second substrate 120, for example using a double-sided adhesive tape 126, adhesive film, or other adhesive. The first fabric covering 116 and the second fabric covering 124 do not need to be made from the same material.

The device 110 includes a third conductive pattern 132 that is formed of a conductive material and is configured to provide a ground plane element 132 to reduce capacitive coupling between the occupant detection electrode 114 and the seat heater element 122. Because of the proximity of the occupant detection electrode 114 and the seat heater element 122, it may be desirable to reduce the capacitive coupling between them so that the coupling between the occupant detection electrode 114 and seat occupant may be more easily detected.

The ground plane element 132 is preferably disposed on a second surface of the first substrate 112 that is opposite the first surface of the first substrate 112 on which the occupant detection electrode 114 is disposed. Alternatively, the ground plane element 132 may be disposed on a separate substrate intermediate the first and second conductive pattern (not shown) or may be disposed on a surface of the second substrate opposite the second conducive pattern and intermediate to the first and second conductive pattern (not shown). The ground plane element 132 may be formed by a polymer thick film screen printed layer, such as a solid layer of plated silver or other materials suitable for creating electrical ground plane layer. Alternatively, a metalized MYLAR® sheet, a metalized foil laminate, or a metal sheet can be used for the ground plane element 132 and may be applied to the first substrate 112 by a metalized adhesive or other suitable laminating process instead of screen printing. The ground plane element 132 may be provided of similar size, shape and configuration to the occupant detection electrode 114. Alternatively, the ground plane element 132 can be provided of some size larger than the occupant detection electrode 114 and may be applied to substantially the entire dimension of the surface of the first substrate 112 opposite the surface on which the occupant detection electrode 114 is disposed.

The occupant detection electrode 114 and the ground plane element 132 are capacitively coupled due to proximity. To reduce capacitive coupling between the occupant detection electrode 114 and the ground plane element 132, the same voltage signal may be simultaneously applied to both the occupant detection electrode 114 and the ground plane element 132. Without subscribing to any particular theory of operation, since the occupant detection electrode 114 and the ground plane element 132 are at the same voltage, there is no electrical potential difference between them and they are effectively capacitively isolated from each other.

The device 110 further includes a compressible spacer 128 that is generally disposed between the first substrate 112 and the second substrate 120. As used herein, compressible means that the compression deflection of the spacer 128 is equal to or greater than 25% when a pressure equivalent to that exerted by the weight of a 5^{th} percentile female seat occupant is applied to the spacer 128. The compression deflection of the spacer 128 will depend on the material selected for the spacer 128. The compressible spacer 128 may include a compressible pneumatic cell. The compressible spacer 128 may contain a single pneumatic cell, such as a polymeric bladder or the spacer 128 may contain a plurality of pneumatic cells, such as in a closed or open cell foam material like urethane foam. In one embodiment of the device 110, the compression deflection of the spacer 128 is about 40% at a pressure of about 7.6 kilopascals (1.1 pounds per square inch). It is desirable that the compressible spacer 128 be easily compressed by under a lighter load, i.e. pressure, so that the increased sensitivity of the device 110 provided by the compressible spacer 128 is more pronounced with a seat occupant weighing around 46 kg. Thus, the device 110 is more sensitive to seat occupants in the weight range critical for enabling or disabling a supplemental inflatable restraint system.

The spacer 128 is attached to the second surface of the first substrate 112 that is opposite the first surface of the first substrate 112 on which the occupant detection electrode 114 is disposed, for example using a double-sided adhesive tape 130, adhesive film, or other adhesive. The spacer 128 may be proximate, or immediately adjacent, the second fabric covering 124 in the device 110.

The inclusion of the compressible spacer 128 in the device 110 increases the distance between the occupant detection electrode 114 and the seat heating element 122 when the seat is unoccupied. Without subscribing to any particular theory of operation, the increased distance may reduce capacitive coupling between the occupant detection electrode 114 and ground through the seat heating element 122. When the seat is occupied, the occupant detection electrode 114 is capacitively coupled to ground through the seat occupant. Also, when the seat is occupied, the spacer 128 is compressed, reducing the distance between the occupant detection electrode 114 and the seat heating element 122 and increasing the capacitive coupling between the occupant detection electrode 114 and the seat heating element 122. The increased coupling of the occupant detection electrode 114 to the seat heating element 122 is in addition to the coupling of the occupant detection electrode 114 to the seat occupant, thus increasing the sensitivity of the occupant sensor.

The device 110 may further include another layer of double-sided adhesive tape 134 that secures the device 110 to the vehicle seat 20. The device 110 may also include a layer of release paper proximate to the layer of double-sided adhesive tape 118 to protect the double-sided adhesive tape 118 from undesirably sticking to something other than the seat before the device 110 is installed into the vehicle seat 20.

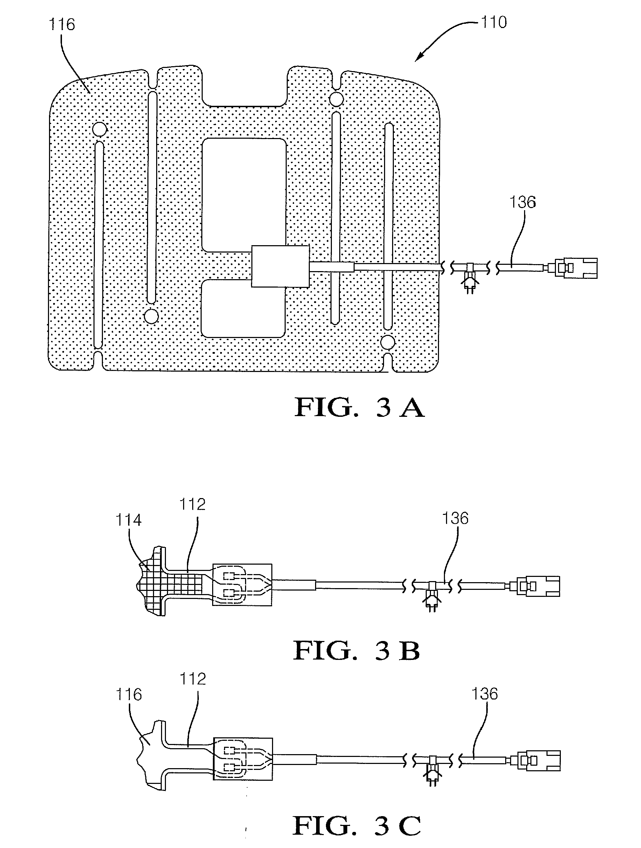

As shown in Fig. 3, the device 110 may further include a wiring harness 136 connected to the occupant detection electrode 114 to connect the occupant detection electrode 114 to electronic circuitry that transmits a sensor voltage signal and measures the capacitance between the occupant detection electrode 114. The wiring harness 136 also connects the ground plane element 132 to a circuitry that transmits a buffered sensor voltage signal to the ground plane element 132 to capacitively isolate the ground plane element 132 from the occupant detection electrode 114. The device 110 may also include a second wiring harness (not shown) connected to the seat heating element 122 to provide electric current to heat the seat heating element 122.

Those skilled in the art will understand that seat heating element 122 occupant detection electrode 114 and other conductive patterns described herein may include electrical conductors that are made from a conductive metal such as copper, silver, gold, aluminum, carbon, or graphitic materials. It is further known that the conductive material used as the electrical conductors may be made of very small flakes of material in a polymer matrix. If this material is caused to be over-stretched or subject to repeated stretching, the conductive patterns may crack, thereby resulting in undesirable loss of electrical continuity or short circuiting. To help alleviate potential cracking, apertures may be provided in and through the various layers described above, including the first substrate 112 or the second substrate 120. The apertures may include holes, rectangular cutouts or irregular cutouts as necessary to promote desired bending at desired locations. The apertures may extend between multiple layers in the same size, shape and configuration; or the apertures may vary in size, shape and configuration from one layer to another layer.

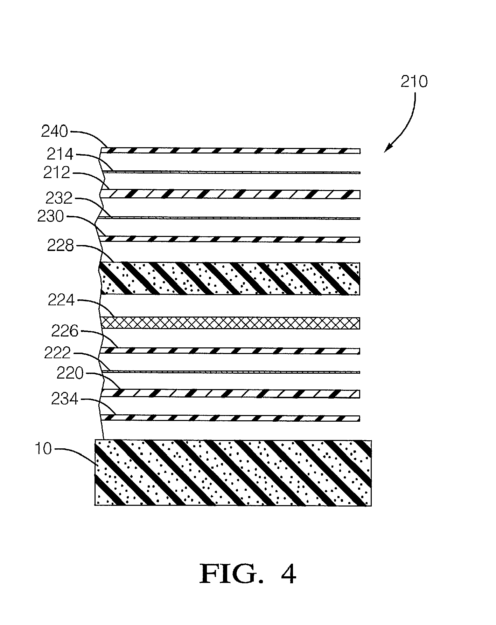

Fig. 4 illustrates another alternative embodiment of a seat occupant sensor and heater device 210. The device 210 does not include a fabric covering proximate the first substrate 212, i.e. adhesively attached to the first substrate 212. Developmental testing by the inventors has determined that eliminating a fabric covering proximate the first substrate 212 reduces variability in an output from the occupant sensor in high humidity conditions. As used herein, high humidity indicates a relative humidity (R.H.) that is near or exceeds 85%. It has been observed that the degree of variability of sensor output is more pronounced when humidity exceeds 85% R.H. Because the seat heater already includes one fabric covering 224, a fabric covering proximate the first substrate 212 can be eliminated and a single-sided adhesive tape 240 may be used to protect the occupant detection electrode 214. The primary benefit of eliminating a fabric covering near the first substrate 112 is improvement in the occupant sensor variation in high humidity conditions. Eliminating the fabric covering near the first substrate 112 also provides the benefit of cost savings. The single sided adhesive tape 240 may also be eliminated in certain application of the device 210, further increasing sensitivity of the occupant detection electrode 214 by reducing the distance between the occupant detection electrode 214 and the seat occupant.

Accordingly, a seat occupant sensor and heater device 110, 210 is provided. The device 110, 210 includes a compressible spacer 128, 228 that increases sensitivity of the occupant sensor by increasing the capacitive coupling between the occupant detection electrode 114, 214 and the seat heating element 122, 212 as the compressible spacer 128, 228 compresses under the load of the seat occupant. The device 210 may provide improved performance in high humidity conditions by not including a fabric covering in the device 210 that is in proximity to the occupant detection electrode 214, as shown in Fig. 4.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. A seat occupant sensor and heater device (110) configured for use in a vehicle seat (20), said device (110) comprising:
a first conductive pattern (114) formed of conductive material configured to provide an occupant detection electrode (114) and disposed on a first surface of a first dielectric substrate (112);
a second conductive pattern (122) formed of conductive material configured to provide a seat heating element (122) and disposed on a surface of a second dielectric substrate; and
a compressible spacer (128) disposed intermediate to the first conductive pattern (114) and the second conductive pattern (122) and configured to reduce capacitive coupling between the first conductive pattern (114) and the second conductive pattern (122) when uncompressed and increase capacitive coupling between the first conductive pattern (114) and the second conductive pattern (122) when compressed.

2. The device (110) of claim 1, further comprising a third conductive pattern (132) formed of a conductive material disposed on a second surface of the first dielectric substrate (112) that is opposite the first surface of the first dielectric substrate (112) on which the occupant detection electrode (114) is disposed, wherein the third conductive pattern (132) is configured to provide a ground plane element (132) for the occupant detection electrode (114) to reduce capacitive coupling between the first conductive pattern (114) and the second conductive pattern (122).

3. The device (110) of claim 2, wherein the compressible spacer (128) includes a compressible pneumatic cell.

4. The device (110) of claim 3, wherein the compression deflection of the compressive spacer (128) is about 40% at a pressure of about 7.6 kilopascals.

5. The device (210) of anyone of claims 2 to 4, wherein said device (210) does not include a fabric covering adhesively joined to the first surface of the first dielectric substrate (212).

6. A vehicle seat assembly (20) comprising:
a seat cushion (10); and
the seat occupant sensor and heater device (110) according to anyone of claims 1 to 5.
